# EUROPEAN PATENT APPLICATION

(11) **EP 1 208 733 A1**
(43) Date of publication of application: **29.05.2002**
(21) Application number: 00125768.2
(22) Date of filing: 24.11.2000
(51) Int. Cl.: A01C 17/00

(54) **An apparatus for spreading flowable material**

(71) Applicant: A.P. Laursen A/S, DK-7171 Uldum (DK)
(72) Inventor: Laursen, Nils Jörn, 8722 Hedensted (DK)
(74) Representative: Roerboel, Leif

(57) **Abstract**

The apparatus for spreading flowable material comprises
a) at least one container for flowable material and comprising at least one outlet opening for the material,
b) a spreader disc (1) positioned below at least one of said outlet openings and adapted to rotate about a mainly vertical axis in a first direction (7) or in a second, opposite direction (8), and
c) at least one spreader vane construction (2) secured to the upper side of each spreader disc (1) and comprising a first (3) and second (4) vane part protruding upwardly from the spreader disc (1) and having a not inconsiderable extent in the axial and radial directions, the first vane part (3) being active and controlling for the spreading when the spreader disc is rotating in the first direction (7) and the second vane part (4) being active and controlling for the spreading when the spreader disc is rotating in the second, opposite direction (8), whereby the engagement of the two vane parts (3,4) with the material provides different spreading patterns when the spreader disc is rotating in the first (7) and second, opposite direction (8), respectively. By constructing the engagement surfaces of the two vane parts (3,4) mutually independently, the two vane parts can be formed individually without influencing the function of the other vane part.

## Description

### TECHNICAL FIELD

The present invention relates to an apparatus for spreading flowable material of the kind set forth in the preamble of claim 1.

### BACKGROUND ART

An apparatus of this kind is e.g. known from EP-0,880,877. This document describes an apparatus comprising at least one container for flowable with at least one outlet opening for the material. A spreader disc positioned below said outlet opening is adapted to rotate about a mainly vertical axis in two different directions and the spreader disc is provided with a spreader vane construction having a radial inner part and radial outer part. The radial outer end of the radial inner part is offset in such a manner in the radial and tangential direction relative to the radial inner end of the radial outer part that an opening is formed between them, through which the flowable material can pass, when rotating in one of said directions. With this construction, the spreading pattern can be changed, e.g. with a view to be able to pass along a field boundary or a water course without spreading e.g. fertiliser beyond certain limits, by making the disc rotate in the direction in which the flowable material passes through said opening, whereby a reduced casting distance is obtained. In this construction, the forming of the radial inner part and the radial outer part are, however, mutually dependent and changes of the construction of one of these parts will inevitably influence the spreading patterns for both directions of rotation.

### DISCLOSURE OF THE INVENTION

Based on this prior art, it is the object of the present invention to provide an apparatus of the kind referred to initially, with which it is possible to construct the vane part being active and controlling for the spreading, when the spreader disc is rotating in one direction, independently of the vane part being active and controlling for the spreading when the spreader disc is rotating in the opposite direction, and this object is achieved by the features set forth in the characterizing clause of claim 1. By so doing, it is possible to change the construction of one vane part without influencing the function of the other vane part.

Preferred embodiments of the apparatus according to the invention are revealed in the sub-ordinate claims in which claims 2-5 indicate different ways of providing different spreading patterns for the two vane parts being active and controlling for the spreading when the spreading disc is rotating in the two different directions, respectively, and claims 6-8 indicate different preferred construction details for the vane parts.

### BRIEF DESCRIPTION OF THE DRAWINGS

The present invention will be explained in the following with reference to the drawings, showing an exemplary embodiment of a spreading apparatus according to the invention, of which only the parts necessary for the understanding of the invention are shown, whereas
Figure 1 shows in perspective as viewed at a skew angle from above, a spreader disc to which two spreader vane constructions according to the invention are secured,
Figure 2 is a top view of the construction shown in Figure 1,
Figure 3 is a front view of the construction shown in Figures 1 and 2,
Figure 4 is a perspective view of the spreader vane construction shown in Figures 1-3, and
Figure 5 is a view of the spreader vane construction seen in the direction V-V in Figure 2.

### DESCRIPTION OF THE PREFERRED EMBODIMENT

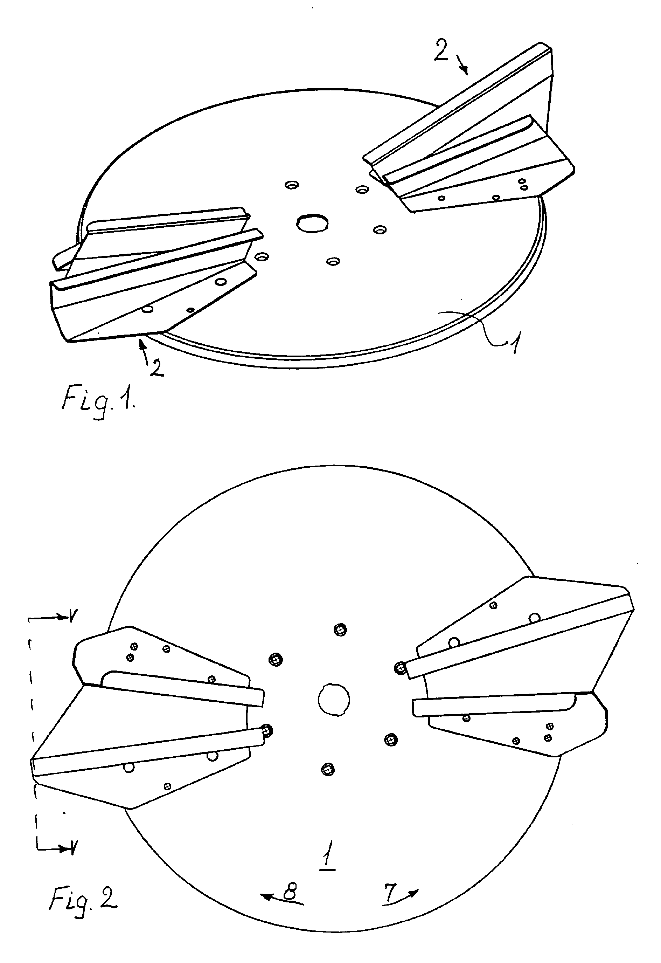

The Figures 1-3 show different views of a dish-shaped spreader disc 1 adapted to rotate about a generally vertical axis during operation in a first direction 7 or in a second and opposite direction 8, such as will be explained in more detail below.

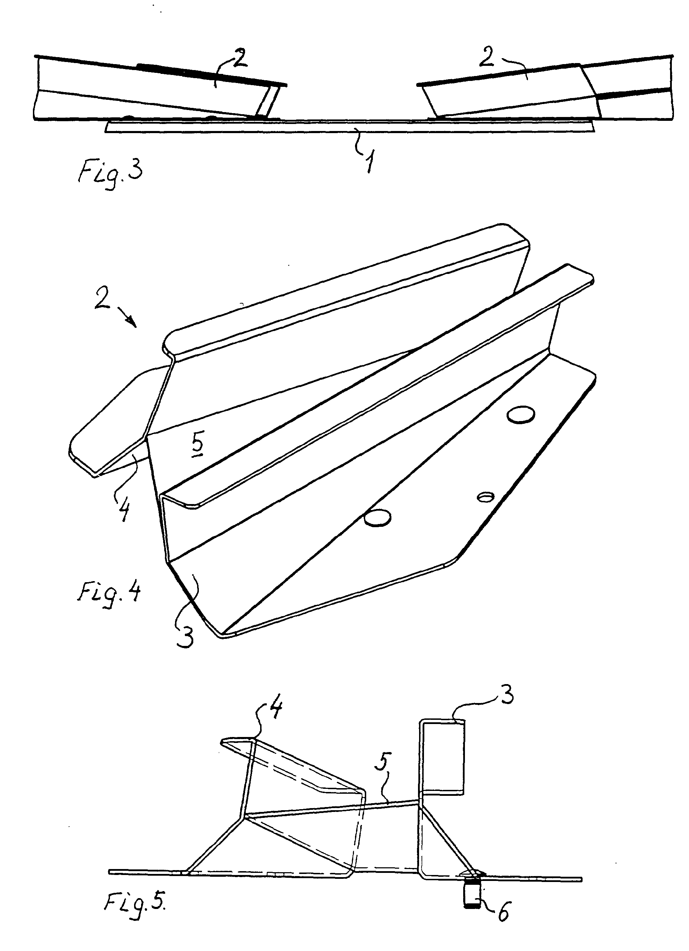

The spreader disc 1 carries two spreader vane constructions 2, each of which, as shown in Figures 4 and 5, comprising a first vane part 3 and a second vane part 4 where the first vane part 3 is active and controlling for the spreading when the disc 1 is rotating in the first direction of rotation 7 and the second vane part 4 being active and controlling for the spreading, when the disc is rotating in the second direction of rotation 8. In the vane construction 2 shown in the Figures, a connecting plate 5 is positioned between the first vane part 3 and the second vane part 4 in order to fix the relative position of the two vane parts 3,4, whereby the vane part construction 2 is constructed in one unit for mounting on the spreading disc 1. The vane construction 2 is mounted on the spreading disc 1 by means of bolts or rivets 6, or any other suitable mounting means.

The special feature of the spreader vane construction 2 according to the present invention consists in the fact that the first and second vane parts 3 and 4 are formed mutually independently, whereby the spreading pattern provided by the two vane parts can be formed independently. In the construction shown in the Figures, the different spreading patterns are provided by providing an engagement of the two vane parts with the material, which ceases in different radial distance from the axis of rotation, thus providing a different casting distance for the two vane parts 3,4. By having the two vane parts 3,4 formed mutually independently, it is also possible to provide the different spreading patterns by having the engagement of the two vane parts with the material initiated in different radial distances from the axis of rotation, due to the fact that the acceleration of the material naturally will be dependent on the distance over which the vane part engages the material.

Other possibilities of providing different spreading patterns for the two vane parts 3,4 are to provide different angular positions of the vane parts relative to a radial direction or to form the vane parts with different curvature or different friction or different retarding arrangements.

In an alternative embodiment, the connecting plate 5 can be positioned at the top of the two vane parts 3,4, thereby covering the interspace between those two vane parts 3,4, whereby the material to be spread is unable to penetrate into the area between the two vane parts 3,4.

Another alternative could be to omit the connecting plate 5, whereby the two vane parts 3,4 are constructed as separate units, each to be mounted on the spreading disc 1.

The different constructions of the spreader disc 1 with vane construction 2 are, in a known manner, positioned to receive flowable material, e.g. fertiliser in the form of granules, in a known manner falling down from suitable openings in the bottom of the container.

In the manner known, the material is thrown outwards by the centrifugal force, possibly assisted by the air current created by the spreader vanes 3,4, until it is intercepted by the vanes and thrown further outwardly from the disc 1 in a spreading pattern which is controlled by the construction of the disc 1 and the vane parts 3,4, whereby the construction of the vane parts 3,4 primarily determine the throwing distance.

By means of the described construction it is possible to control the casting distance for the spreading apparatus by simply changing the direction of rotation of the disc 1, further control being possible by adjusting the rotational speed of the disc 1.

Several modifications of the apparatus may be performed without deviating from the following claims, such modifications e.g. comprising further means, such as adjustable screens or guides for controlling the spreading patterns, e.g. of the type known from EP-A2-0,699,377.

## Claims

1. Apparatus for spreading flowable material comprising
a) at least one container for flowable material and comprising at least one outlet opening for the material,
b) a spreader disc (1) positioned below at least one of said outlet openings and adapted to rotate about a mainly vertical axis in a first direction (7) or in a second, opposite direction (8), and
c) at least one spreader vane construction (2) secured to the upper side of each spreader disc (1) and comprising a first (3) and second (4) vane part protruding upwardly from the spreader disc (1) and having a not inconsiderable extent in the axial and radial directions, the first vane part (3) being active and controlling for the spreading when the spreader disc is rotating in the first direction (7) and the second vane part (4) being active and controlling for the spreading when the spreader disc is rotating in the second, opposite direction (8), whereby the engagement of the two vane parts (3,4) with the material provides different spreading patterns when the spreader disc is rotating in the first (7) and second, opposite direction (8), respectively, **characterized by** the engagement surfaces of the two vane parts (3,4) being formed mutually independently.

2. Apparatus in accordance with claim 1, **characterized by** the mutually different spreading patterns being provided by the engagement of the first vane part (3) with the material ceasing in a first radial distance from the axis of rotation and the engagement of the second vane part (4) with the material ceasing in a second radial distance from the axis of rotation, said second distance being different from said first distance.

3. Apparatus in accordance with claim 1 or 2, **characterized by** the mutually different spreading patterns being provided by the engagement of the first vane part (3) with the material being initiated in a first radial distance from the axis of rotation and the engagement of the second vane part (4) with the material being initiated in a second radial distance from the axis of rotation, said second distance being different from said first distance.

4. Apparatus in accordance with any of the preceding claims, **characterized by** the mutually different spreading patterns being provided by the angular position of the first vane part (3) relative to the radial direction on the spreading disc being different from the corresponding angular position of the second vane part (4).

5. Apparatus in accordance with any of the preceding claims, **characterized by** the different spreading patterns being provided by forming the engagement surfaces of the two vane parts (3,4) with different curvature or different friction or different retarding arrangements.

6. Apparatus in accordance with any of the preceding claims, **characterized by** comprising a covering (5) of an interspace between the vane parts (3,4).

7. Apparatus in accordance with any of the preceding claims, **characterized by** the two vane parts (3,4) being constructed in one unit (2) for mounting on the spreading disc (1).

8. Apparatus in accordance with any of the claims 1-6, **characterized by** the two vane parts (3,4) being constructed as separate units, each for mounting on the spreading disc (1).
